# EUROPÄISCHE PATENTSCHRIFT

(11) **EP 2 933 541 B1**
(45) Veröffentlichungstag und Bekanntmachung des Hinweises auf die Patenterteilung: **03.10.2018**
(21) Anmeldenummer: 15159786.1
(22) Anmeldetag: 19.03.2015
(51) Int. Cl.: F16L 19/028, F16L 19/04, F16L 19/02, F16L 19/025, F16L 25/12

(54) **SCHRAUBVERBINDUNGSVORRICHTUNG ZUR VERBINDUNG ZWEIER ROHRE**
SCREW CONNECTION DEVICE FOR CONNECTING TWO PIPES
DISPOSITIF DE LIAISON À VIS DESTINÉ À RELIER DEUX TUYAUX

(30) Priorität: 14.04.2014 DE 202014101748 U
(43) Veröffentlichungstag der Anmeldung: 21.10.2015
(73) Patentinhaber: TI Automotive (Heidelberg) GmbH, 69123 Heidelberg (DE)
(72) Erfinder: Stahn, Andreas, 69231 Rauenberg (DE); Özbenlikan, Ünal, 69231 Rauenberg (DE)
(74) Vertreter: Rohmann, Michael

(56) Entgegenhaltungen:
- EP-A1- 1 528 309
- EP-A1- 2 642 172
- DE-C5- 10 107 246

## Beschreibung

Die Erfindung betrifft eine Schraubverbindungsvorrichtung zur Verbindung zweier Rohre, umfassend zwei Rohre mit gebördelten Rohrenden, eine Schraube, eine Schraubenmutter und ein Distanzelement.

Schraubverbindungsvorrichtungen der vorstehend genannten Art sind auch aus dem Schrifttum grundsätzlich bekannt. EP 2 642 172 A1 lehrt eine Schraubverbindungsvorrichtung zur Verbindung gebördelter Rohrenden zweier Rohre, insbesondere für Bremsleitungen. Die Vorrichtung umfasst ferner eine Schraubenmutter und eine Schraube, wobei ein Distanzelement als fluiddichte Kupplung der beiden Rohre innerhalb eines als Schraubenmutter ausgebildeten Kupplungsstücks dient. Mit der Schraube wird das zweite Rohr fest angezogen, wodurch Dichtigkeit gewährleistet wird. In einer Vormontage werden das erste Rohr sowie das Distanzelement in die Schraubenmutter eingeführt und erst während der, gegebenenfalls an einem anderen Ort stattfindenden, Montage mit dem zweiten Rohr verbunden. Damit das Distanzelement während eines etwaigen Transportes zwischen Vormontage und Montage nicht aus der Schraubenmutter wieder herausfällt, wird es gemäß genanntem Dokument durch ein sich in den Aufnahmeraum hinein erstreckendes Gewindeprofil des Innengewindes der Schraubenmutter in dem Aufnahmeraum gehalten. Das Distanzelement kann mittels des an ihm vorgesehenen Außengewindes in das Innengewinde der Schraubenmutter hineingeschraubt werden, bis es nicht mehr in besagtes Innengewinde eingreift und sich stattdessen in einem gewindefreien Abschnitt des Aufnahmeraums befindet. Dort wird es durch das sich in dem Aufnahmeraum hineinstreckende Innengewinde der Schraubenmutter unverlierbar gehalten, was den Aufwand bei der Montage deutlich reduziert. Nachteilig ist jedoch, dass gemäß dieser Lösung das Distanzelement mit einem Außengewinde versehen werden muss, was seinerseits den Aufwand erhöht. Im Übrigen verursacht auch das bloße Einschrauben des Distanzelementes einen gewissen Aufwand.

Aus DE 10 107 246 C5 ist bekannt, ein Distanzelement ohne Außengewinde herzustellen, welches aber ebenfalls unverlierbar in einem Aufnahmeraum gehalten wird. Dies wird durch einen sich in den Aufnahmeraum erstreckenden Ring am Rande des gewindefreien Aufnahmeraums erreicht, welcher nach Einführung von dem ersten Rohr und dem Distanzelement durch Verstemmen in axialer Richtung hergestellt wird. Im Längsschnitt ist ersichtlich, dass das Verstemmen zu einem Ring führt, welcher in seinem Querschnitt etwa nasenförmig ist und insgesamt recht filigran ausgebildet ist. Um einen solchen Ring herzustellen, bedarf es einer sehr genauen Ausrichtung des Verstemmwerkzeuges, was wiederum den Aufwand vergrößert. Schon eine nur leicht nachlässige Sorgfalt bei der Ausrichtung des Verstemmwerkzeuges führt zu abgebrochenen bzw. zu fehlenden Ringabschnitten, was wiederum eine erhöhte Ausschussrate zur Folge hat.

Der Erfindung liegt daher das technische Problem zugrunde, eine Schraubverbindungsvorrichtung der eingangs genannten Art anzugeben, die sich durch eine zuverlässige Montierbarkeit und zudem eine einfache Herstellbarkeit auszeichnet.

Zur Lösung des technischen Problems lehrt die Erfindung eine Schraubverbindungsvorrichtung zur Verbindung zweier Rohre, umfassend zwei Rohre mit gebördelten Rohrenden, eine Schraube, eine Schraubenmutter und ein Distanzelement, wobei die Schraubenmutter einen Aufnahmeraum umfasst, wobei das Distanzelement unverlierbar in dem Aufnahmeraum aufgenommen ist, wobei das Distanzelement das erste Rohr unverlierbar in der Schraubenmutter hält, wobei das zweite Rohr mittels der Schraube in der Schraubenmutter befestigbar ist, wobei eine Außenfläche des Distanzelementes über wenigstens einen Abschnitt hinweg zylindrisch geformt ist, wobei das Distanzelement eine erste und eine zweite Stirnseite aufweist, wobei am Distanzelement ein erster Vorsprung vorgesehen ist, welcher mit der Schraubenmutter im Bereich des Aufnahmeraums in Eingriff zur unverlierbaren Aufnahme steht, wobei die Schraubenmutter im Bereich des Aufnahmeraums wenigstens eine nach innen ragende Nase aufweist und der Nase eine Einbuchtung auf der Außenseite der Schraubenmutter zugeordnet ist. Der Ausdruck "gebördelt" meint solche Bördelformen, welche den üblichen Standards im Kraftfahrzeugbereich entsprechen. Hierunter fallen insbesondere F- und E-Bördel.
Der Begriff "unverlierbar" bedeutet, dass zur Entnahme des vormontierten Distanzelementes Kräfte aufgewendet werden müssen, welche über diejenigen Kräfte hinausgehen, welche eine menschliche Hand zur Verfügung stellt.

Die Bezeichnung "vormontiert" meint, dass die Schraube nicht oder lediglich teilweise in die Schraubenmutter eingeschraubt ist. Im vormontierten Zustand wird durch die Schraube besonders bevorzugt keine Anpresskraft auf den zweiten Bördel ausgeübt. Demgegenüber bedeutet "montiert", dass durch die Anpresskraft der zweite Bördel fluiddicht an das Distanzelement und das Distanzelement fluiddicht an den ersten Bördel gedrückt ist. Im montierten Zustand kann ein Fluid somit flüssigkeitsdicht durch die Rohre strömen. Als Fluide kommen beispielsweise Bremsflüssigkeit oder auch Kraftstoff in Frage.
Es liegt im Rahmen der Erfindung, dass der Aufnahmeraum kreiszylindrisch ausgebildet ist. Dem Aufnahmeraum entsprechend ist auch das Distanzelement über wenigstens einen Abschnitt hinweg zylindrisch geformt. Dadurch weist das Distanzelement auch eine zylindrisch geformte Außenfläche auf, welche von einer ersten und einer zweiten Stirnseite begrenzt wird. "Zylindrisch" im Sinne der Erfindung umfasst auch einen Sechskant und Mehrkante höherer Ordnung. Die Stirnseiten des Distanzelementes sind komplementär zu den Bördeln der Rohrenden ausgebildet. Es empfiehlt sich, dass wenigstens eine Stirnseite als Aufnahme für ein F-Bördel vorgesehen ist. Vorzugsweise sind beide Stirnseiten zur Aufnahme von F-Bördeln vorgesehen.

Der Ausdruck "Vorsprung" bedeutet, dass ein Teil des wie vorbeschrieben geformten Distanzelementes vorspringt, also von der vorbeschriebenen Form dahingehend abweicht, dass dieser Teil nach außen absteht. Das Distanzelement und der Vorsprung/die Vorsprünge mögen als zusammengehörendes einteiliges Element ausgebildet sein. Das Element kann aber auch ohne weiteres auch zwei- oder mehrteilig sein.

Der Begriff "Eingriff" meint, dass der erste Vorsprung und die Schraubenmutter derart wechselwirken, dass ein Herausfallen des Distanzelementes aus der Schraubenmutter verhindert wird. Bezugsgröße ist dabei die Krafteinwirkung durch die menschliche Hand. Durch den Ausdruck "Eingriff' wird ferner impliziert, dass die unverlierbare Aufnahme des Distanzelementes durch einen Formschluss erzielt wird. Ein Kraftschluss ist aufgrund der noch durchzuführenden Montage nicht sinnvoll, und eben so wenig ein Stoffschluss (beispielsweise durch Verkleben), welcher einen höheren Aufwand in der Vormontage bedeutet.

Es liegt im Rahmen der Erfindung, dass der erste Vorsprung das Distanzelement wenigstens teilweise umläuft. Vorzugsweise umläuft der erste Vorsprung das Distanzelement entlang des Umfangs der zylindrisch geformten Außenfläche. Wenn der erste Vorsprung das Distanzelement vollständig umläuft, so bildet er einen Ring. Der Vorsprung kann aber auch lediglich abschnittsweise das Distanzelement umlaufen und beispielsweise zwei halbringartige Vorsprünge mit zwei Einkerbungen dazwischen aufweisen. Die Einkerbungen können aber auch größere Winkel umfassen, so dass auch einzelne Nasen oder gar nur eine einzelne Nase als kleinstmögliche Ausprägung des Vorsprungs im Rahmen der Erfindung liegen.

Bevorzugt grenzt der erste Vorsprung an der zylindrisch geformten Außenfläche des Distanzelementes an. So kann der erste Vorsprung in beiden axialen Richtungen an die zylindrisch geformte Außenfläche des Distanzelementes angrenzen. Es ist aber auch im Rahmen der Erfindung, wenn der erste Vorsprung lediglich in einer axialen Richtung an die zylindrisch geformte Außenfläche des Distanzelementes angrenzt.

In einer empfohlenen Ausführung grenzt der erste Vorsprung an der ersten Stirnseite an. Gemäß einer besonders bevorzugten Ausführung grenzt der erste Vorsprung an der ersten Stirnseite und an die zylindrisch geformte Außenfläche des Distanzelementes an. Somit trennt der erste Vorsprung die zylindrisch geformte Außenfläche von der ersten Stirnseite. Gemäß einer weiter bevorzugten Ausführungsform fluchtet eine erste Flanke des ersten Vorsprungs mit der ersten Stirnseite des Distanzelementes. Die erste Flanke kann - im Längsschnitt der Schraubverbindungsvorrichtung - senkrecht zur Achse der Schraubverbindungsvorrichtung ausgebildet sein. Es liegt darüber hinaus im Rahmen der Erfindung, wenn die Flanke sich nicht senkrecht zur Achse verhält, sondern beispielsweise im Falle von F-Bördeln, den Konuswinkel des Distanzelementes verlängert.

Vorzugsweise springt der erste Vorsprung in radialer Richtung vor. Der Begriff "radial" nimmt dabei Bezug auf die Achse der Schraubverbindungsvorrichtung, welche insbesondere auch die Achse der beiden Rohre meint. Somit entspricht ein radialer Vorsprung einem Vorsprung, welcher sich von dem Distanzelement in Richtung der Schraubenmutter erstreckt. Dabei können die Wände des Vorsprungs neben der radialen Komponente auch eine axiale Komponente aufweisen. Zudem ist der Ausdruck "Vorsprung" nicht so auszulegen, dass die Wände des Vorsprungs hinsichtlich der zylindrisch geformten Außenfläche eine Kante bilden müssen. Vielmehr kann der Übergang von den Wänden des Vorsprungs hin zur zylindrisch geformten Außenfläche fließend sein.

Es liegt im Rahmen der Erfindung, dass der erste Vorsprung eine Höhe aufweist, welche 1 bis 20 %, vorzugsweise 3 bis 15 % und besonders vorzugsweise 6 bis 10 % des Radius des Distanzelementes im Bereich des ersten Vorsprungs entspricht. Dabei bezieht sich die Höhe auf die Differenz zwischen dem Radius der zylindrisch geformten Außenfläche einerseits und dem Radius im Bereich des ersten Vorsprungs. Der Radius im Bereich des ersten Vorsprungs ist derjenige, welcher der größte Radius in diesem Bereich ist. Weitere Ausführungsformen sehen eine Höhe des ersten Vorsprungs vor, welche 5 bis 12 % bzw. 7 bis 9 % des Radius des Distanzelementes im Bereich des ersten Vorsprungs entspricht. Die Toleranz der Höhe des ersten Vorsprungs liegt zwischen +/- 0,01 und 0,2 mm und vorzugsweise zwischen +/-0,02 und 0,1 mm.

Es liegt im Rahmen der Erfindung, dass der erste Vorsprung eine Breite aufweist, welche 5 bis 50 %, vorzugsweise 10 bis 40 % und besonders vorzugsweise 15 bis 30 % und ganz besonders vorzugsweise 17 bis 25 % der Gesamtbreite des Distanzelementes entspricht. Die Toleranz der Breite des ersten Vorsprungs liegt zwischen +/- 0,02 und 0,4 mm und vorzugsweise zwischen 0,05 und 0,2 mm.

Gemäß einer weiteren Ausführungsform weist das Distanzelement einen zweiten Vorsprung auf, welcher mit dem ersten Vorsprung wenigstens abschnittsweise eine Nut bildet. Empfohlenermaßen entspricht der zweite Vorsprung gemäß wenigstens einem bevorzugten Merkmal dem ersten Vorsprung. Vorzugsweise umlaufen beide Vorsprünge das Distanzelement entlang des Umfangs der zylindrisch geformten Außenfläche. Es ist bevorzugt, dass beide Vorsprünge zueinander parallel verlaufen. Darüber hinaus liegt es im Rahmen der Erfindung, wenn der zweite Vorsprung das Distanzelement nur teilweise umläuft. Der zweite Vorsprung kann im Extremfall lediglich eine punktuell ausgebildete Nase erfassen. Es liegt im Rahmen der Erfindung, dass der zweite Vorsprung an der zylindrisch geformten Außenfläche des Distanzelementes angrenzt. Bevorzugt grenzt der zweite Vorsprung an der zweiten Stirnseite an. Gemäß einer weiteren bevorzugten Ausführung fluchtet eine zweite Flanke des zweiten Vorsprungs mit der zweiten Stirnseite des Distanzelementes.

Gemäß einer bevorzugten Ausführungsform weist die Schraubenmutter im Bereich des Aufnahmeraums drei nach innen ragende Nasen auf. Somit ragen die Nase bzw. die Nasen in Richtung Distanzelement in den Aufnahmeraum hinein. Es liegt im Rahmen der Erfindung, dass die Schraubenmutter 2, 4, 5 oder 6 Nasen umfasst. Gemäß einer weiteren Ausführungsform weist die Schraubenmutter eine Vielzahl von Nasen auf, welche aufgrund der Vielzahl ineinander übergehen und so einen Ring bilden. Bevorzugt sind den drei Nasen jeweils eine Einbuchtung auf der Außenseite der Schraubenmutter zugeordnet. Dies kann mittels Verprägen erreicht werden.

Nach einer bevorzugten Ausführungsform weist die Schraubenmutter im Bereich des Aufnahmeraums wenigstens abschnittsweise eine wenigstens vierkantige Außenseite mit wenigstens vier ebenen Teilflächen auf. Vorzugsweise ist die Außenseite der Schraubenmutter sechskantig und weist sechs ebene Teilflächen auf. Darüber hinaus liegen beispielsweise noch acht- oder zehnkantige Außenseiten im Rahmen der Erfindung. Dies gilt bis hin zu einer Schraubenmutter mit beliebig vielen ebenen Teilflächen, was dann einer zylindrischen Außenseite entspricht.

Vorzugsweise sind die wenigstens eine und vorzugsweise die drei Einbuchtungen einer bzw. drei der ebenen Teilflächen zugeordnet. Bevorzugt weist jede Teilfläche eine Einbuchtung auf. Besonders vorzugsweise weist alternierend jede zweite der sechs Teilflächen eine Einbuchtung auf. Gemäß einer weiteren Ausführungsform sind die drei Nasen entlang des Umfangs der Schraubenmutter im Winkel von 90 bis 150°, vorzugsweise im Winkel von 100 bis 140°, besonders vorzugsweise im Winkel vom 110 bis 130° und ganz besonders vorzugsweise im Winkel von 115 bis 125° angeordnet.

Zur Lösung des technischen Problems lehrt die Erfindung ein Verfahren mit einer erfindungsgemäßen Schraubverbindungsvorrichtung zur Verbindung zweier Rohre, wobei die Schraubverbindungsvorrichtung zwei Rohre mit gebördelten Rohrenden, eine Schraube, eine Schraubenmutter und ein Distanzelement umfasst, wobei die Schraubenmutter einen Aufnahmeraum aufweist, wobei eine Außenfläche des Distanzelementes über wenigstens einen Abschnitt hinweg zylindrisch geformt ist, wobei das Distanzelement eine erste und eine zweite Stirnseite aufweist, wobei am Distanzelement ein erster Vorsprung angeordnet wird, wobei ein erstes Rohr mit dem gebördelten Rohrende in die Schraubenmutter eingeführt wird, wobei das Distanzelement anschließend in die Schraubenmutter eingeführt wird, wobei danach die Schraubenmutter mit Krafteinwirkung nach radial innen im Bereich des Aufnahmeraums verstemmt wird, so dass die Schraubenmutter im Bereich des Aufnahmeraums wenigstens eine nach innen ragende Nase aufweist, wobei der Nase eine Einbuchtung auf der Außenseite der Schraubenmutter zugeordnet ist, so dass das Distanzelement aufgrund des ersten Vorsprungs im Bereich des Aufnahmeraums mit der Schraubenmutter in Eingriff zur unverlierbaren Aufnahme gebracht wird, wobei das zweite Rohr mittels der Schraube in der Schraubenmutter befestigt wird, so dass eine fluiddichte Bindung zwischen den beiden Rohren entsteht.

Der Erfindung liegt die Erkenntnis zugrunde, dass sich eine erfindungsgemäße Schraubverbindungsvorrichtung durch eine einfache Montierbarkeit und zugleich durch einen geringen Aufwand bei der Herstellung auszeichnet. Erfindungsgemäß ist es gewährleistet, dass das Distanzelement auch im vormontierten Zustand zuverlässig in dem Aufnahmeraum gehalten wird. Ein Verlieren des Distanzelementes, beispielsweise während eines Transportes, ist ausgeschlossen, was dann den Aufwand bei der Montage deutlich verringert. Durch das Verprägen von Teilflächen der Schraubenmutter kann besonders schnell und einfach die Unverlierbarkeit des Distanzelementes gewährleistet werden. Dies reduziert die Stückkosten sowohl unmittelbar, als auch mittelbar über die Fehleranfälligkeit, wodurch der Ausschuss verringert wird.

Nachfolgend wird die Erfindung anhand einer zwei Ausführungsbeispiele darstellenden Zeichnung detailliert erläutert. Es zeigen schematisch:
- Fig. 1A: eine erfindungsgemäße Schraubverbindungsvorrichtung im montierten Zustand im Längsschnitt,
- Fig. 1B: die erfindungsgemäße Schraubverbindungsvorrichtung aus Fig. 1 A im Querschnitt,
- Fig. 1C: das erfindungsgemäße Distanzelement aus den Figuren 1A und 1B mit schematischer Bemaßung,
- Fig. 2A: eine zweite erfindungsgemäße Schraubverbindungsvorrichtung im vormontierten Zustand im Längsschnitt und
- Fig. 2B: das erfindungsgemäße Distanzelement aus Fig. 2A in Seit- und Vorderansicht.

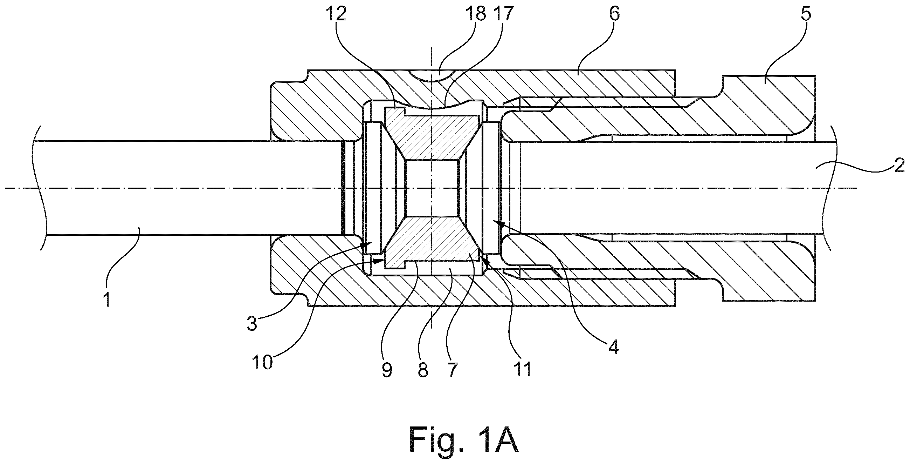

In Fig. 1A ist eine Schraubverbindungsvorrichtung dargestellt, die zwei Rohre 1, 2 mit gebördelten Rohrenden 3, 4, eine Schraube 5, eine Schraubmutter 6 sowie ein Distanzelement 7 umfasst. Die gebördelten Rohrenden 3, 4 sind als F-Bördel ausgestaltet. Das Distanzelement 7 weist auf seinen Stirnseiten 10, 11 je eine innenkonische Dichtfläche auf, welche an die konischen Flächen der F-Bördel angepresst sind. Diese Anpressung wird mittels der Schraube 5 erreicht, welche in das Innengewinde der Schraubenmutter 6 eingreift und so das Rohr 2 an das Distanzelement 7 andrückt. Durch das Andrücken wird eine fluiddichte Verbindung erzielt.

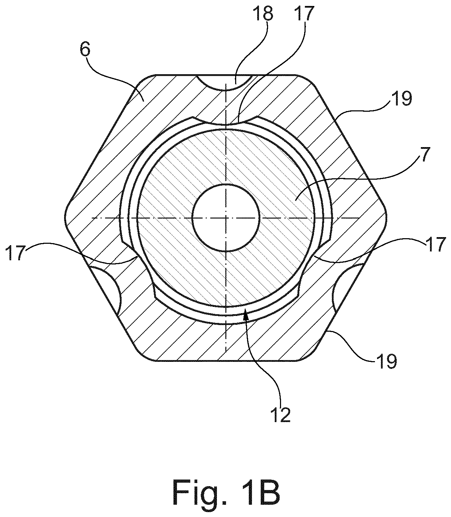

Im hier nicht dargestellten vormontierten Zustand befinden sich lediglich das Rohr 1 sowie das Distanzelement 7 innerhalb eines Aufnahmeraumes 8 der Schraubenmutter 6. Ein Vorsprung 12 an dem Distanzelement 7 sowie drei Nasen 17 (s. Fig. 1b) der Schraubenmutter 6 stehen in Eingriff miteinander und verhindern so ein Herausfallen des Distanzelementes 7 und in der Folge auch ein Herausfallen des Rohres 1.

Wie Fig. 1A und insbesondere Fig. 1B zu entnehmen ist, sind den Nasen 17 Einbuchtungen 18 zugeordnet. Diese Einbuchtungen entstehen durch Verprägen, also durch Krafteinwirkung nach radial innen auf die Schraubenmutter. Die Nasen 17 und Einbuchtungen 18 sind alternierend jeder zweiten Teilfläche 19 der Schraubenmutter 6 zugeordnet. Insbesondere die sechs ebenen Teilflächen 19 ermöglichen eine einfache Handhabung der Schraubverbindungsvorrichtung.

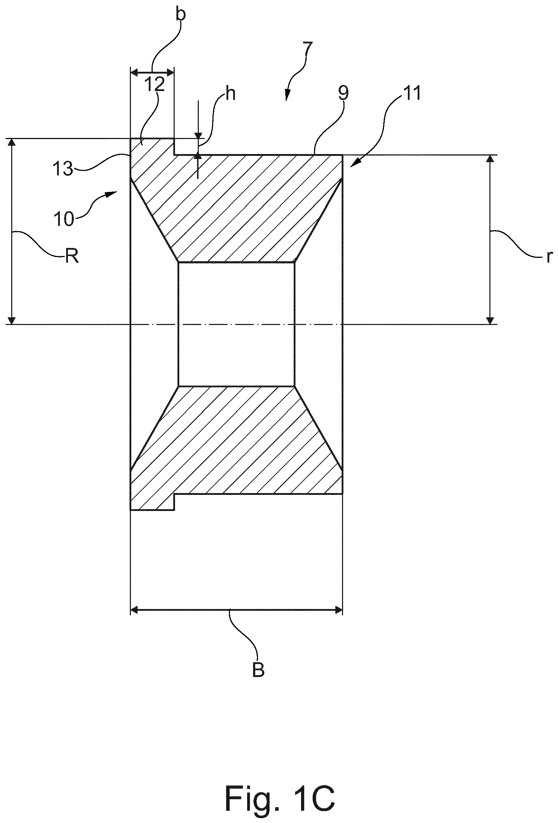

Fig. 1C ist die schematische Bemaßung des Distanzelementes 7 zu entnehmen. Der erste Vorsprung 12 weist eine erste Flanke 13 auf, welche mit einer Wand der Stirnseite 10 des Distanzelementes 7 fluchtet. Eine Höhe h des ersten Vorsprungs 12 entspricht dabei der Differenz zwischen der größten radialen Ausdehnung R des ersten Vorsprungs 12 und dem Radius r des Distanzelementes 7 im Bereich der zylindrisch geformten Außenfläche 9. Im vorliegenden Ausführungsbeispiel beträgt die Höhe h 0,35 mm bei einer Toleranz von 0,025 mm. Der Radius im Bereich der zylindrisch geformten Außenfläche 9 beträgt 4,0 mm bei einer Toleranz von 0,025 mm. Die Breite b des ersten Vorsprungs 12 beträgt 1,0 mm bei einer Toleranz von 0,1 mm. Die Breite B des Distanzelementes 7 entspricht 5,0 mm bei einer Toleranz von 0,2 mm.

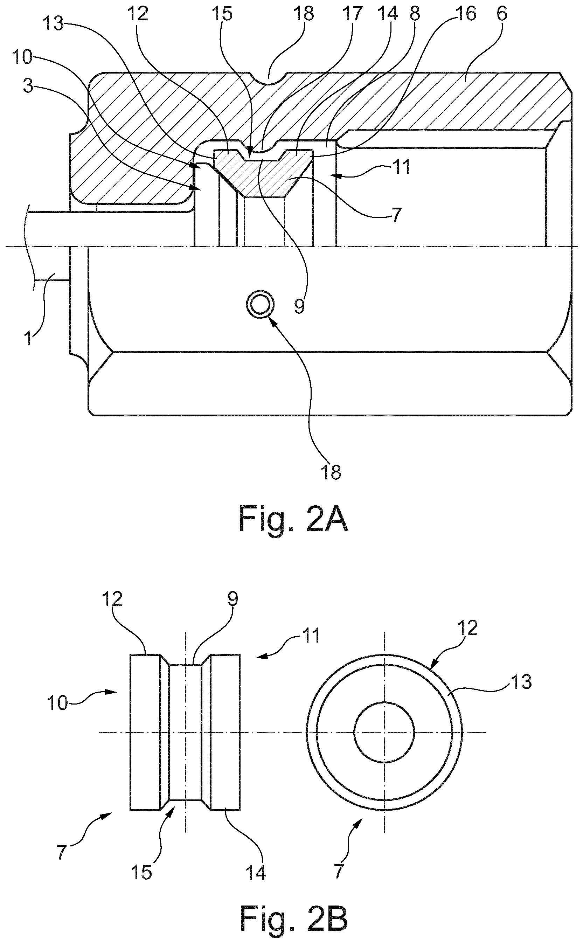

Die Figuren 2A und 2B veranschaulichen eine zweite erfindungsgemäße Schraubverbindungsvorrichtung, welche sich von der ersten erfindungsgemäßen Schraubverbindungsvorrichtung im Wesentlichen dadurch unterscheidet, dass das Distanzelement 7 einen zweiten Vorsprung 14 mit einer zweiten Flanke 16 aufweist. Dabei bilden der erste 12 und der zweite Vorsprung 14 eine Nut 15, in welche die Nasen 17 eingreifen.

## Patentansprüche

1. Schraubverbindungsvorrichtung zur Verbindung zweier Rohre (1, 2), umfassend zwei Rohre (1, 2) mit gebördelten Rohrenden (3, 4),eine Schraube (5), eine Schraubenmutter (6) und ein Distanzelement (7), wobei die Schraubenmutter (6) einen Aufnahmeraum (8) umfasst, wobei das Distanzelement (7) unverlierbar in dem Aufnahmeraum (8) aufgenommen ist, wobei das Distanzelement (7) das erste Rohr (1) unverlierbar in der Schraubenmutter (6) hält, wobei das zweite Rohr (2) mittels der Schraube (5) in der Schraubenmutter (6) befestigbar ist, wobei eine Außenfläche (9) des Distanzelementes (7) über wenigstens einen Abschnitt hinweg zylindrisch geformt ist, wobei das Distanzelement (7) eine erste (10) und eine zweite Stirnseite (11) aufweist, wobei am Distanzelement (7) ein erster Vorsprung (12) vorgesehen ist, welcher mit der Schraubenmutter (6) im Bereich des Aufnahmeraums (8) in Eingriff zur unverlierbaren Aufnahme steht, **dadurch gekennzeichnet, dass** die Schraubenmutter (6) im Bereich des Aufnahmeraums (8) wenigstens eine nach innen ragende Nase (17) aufweist und der Nase (17) eine Einbuchtung (18) auf der Außenseite der Schraubenmutter (6) zugeordnet ist.

2. Schraubverbindungsvorrichtung nach Anspruch 1, wobei der erste Vorsprung (12) das Distanzelement (7) wenigstens teilweise umläuft.

3. Schraubverbindungsvorrichtung nach Anspruch 1 oder 2, wobei der erste Vorsprung (12) an der zylindrisch geformten Außenfläche (9) des Distanzelementes angrenzt.

4. Schraubverbindungsvorrichtung nach einem der Ansprüche 1 bis 3, wobei der erste Vorsprung (12) an der ersten Stirnseite (10) angrenzt.

5. Schraubverbindungsvorrichtung nach einem der Ansprüche 1 bis 4, wobei der erste Vorsprung (12) in radialer Richtung vorspringt.

6. Schraubverbindungsvorrichtung nach einem der Ansprüche 1 bis 5, wobei eine erste Flanke (13) des ersten Vorsprungs (12) mit der ersten Stirnseite (10) des Distanzelementes (7) fluchtet.

7. Schraubverbindungsvorrichtung nach einem der Ansprüche 1 bis 6, wobei der erste Vorsprung (12) eine Höhe (h) aufweist, welche 1 bis 20%, vorzugsweise 3 bis 15% und besonders vorzugsweise 6 bis 10% des Radius (R) des Distanzelementes (7) im Bereich des ersten Vorsprungs (12) entspricht.

8. Schraubverbindungsvorrichtung nach einem der Ansprüche 1 bis 7, wobei der erste Vorsprung (12) eine Breite (b) aufweist, welche 5 bis 50%, vorzugsweise 10 bis 40% und besonders vorzugsweise 15 bis 30% der Gesamtbreite (B) des Distanzelementes (7) entspricht.

9. Schraubverbindungsvorrichtung nach einem der Ansprüche 1 bis 8, wobei das Distanzelement (7) einen zweiten Vorsprung (14) aufweist, welcher mit dem ersten Vorsprung (12) wenigstens abschnittsweise eine Nut (15) bildet und wobei vorzugsweise der zweite Vorsprung dem ersten Vorsprung gemäß wenigstens einem der Ansprüche 1 bis 8 entspricht.

10. Schraubverbindungsvorrichtung nach Anspruch 9, wobei der zweite Vorsprung (14) eine zweite Flanke (16) aufweist, welche mit der zweiten Stirnseite (11) fluchtet.

11. Schraubverbindungsvorrichtung nach einem der Ansprüche 1 bis 10, wobei die Schraubenmutter (6) im Bereich des Aufnahmeraums (8) drei nach innen ragende Nasen (17) aufweist.

12. Schraubverbindungsvorrichtung nach Anspruch 11, wobei den drei Nasen (17) jeweils eine Einbuchtung (18) auf der Außenseite der Schraubenmutter (6) zugeordnet ist.

13. Schraubverbindungsvorrichtung nach einem der Ansprüche 1 bis 12, wobei die Schraubenmutter (6) im Bereich des Aufnahmeraums (8) wenigstens abschnittsweise eine wenigstens vierkantige Außenseite mit wenigstens vier ebenen Teilflächen (19) aufweist.

14. Schraubverbindungsvorrichtung nach Anspruch 13, wobei die wenigstens eine und vorzugsweise die drei Einbuchtungen (18) einer bzw. drei der ebenen Teilflächen (19) zugeordnet sind und wobei besonders vorzugsweise alternierend jede zweite der Teilflächen (19) eine Einbuchtung (18) aufweist.

15. Verfahren zur Verbindung zweier Rohre (1, 2), mit einer Schraubverbindungsvorrichtung nach Anspruch 1, wobei die Schraubverbindungsvorrichtung zwei Rohre (1, 2) mit gebördelten Rohrenden (3, 4), eine Schraube (5), eine Schraubenmutter (6) und ein Distanzelement (7) umfasst, wobei die Schraubenmutter (6) einen Aufnahmeraum (8) aufweist, wobei eine Außenfläche (9) des Distanzelementes (7) über wenigstens einen Abschnitt hinweg zylindrisch geformt ist, wobei das Distanzelement (7) eine erste Stirnseite (10) und eine zweite Stirnseite (11) aufweist, wobei am Distanzelement (7) ein erster Vorsprung (12) angeordnet wird, wobei ein erstes Rohr (1) mit dem gebördelten Rohrende (3) in die Schraubenmutter (6) eingeführt wird, wobei das Distanzelement (7) anschließend in die Schraubenmutter (6) eingeführt wird, wobei danach die Schraubenmutter (6) mit Krafteinwirkung nach radial innen im Bereich des Aufnahmeraums (8) verstemmt wird, so dass die Schraubenmutter (6) im Bereich des Aufnahmeraums (8) wenigstens eine nach innen ragende Nase (17) aufweist und der Nase (17) eine Einbuchtung (18) auf der Außenseite der Schraubenmutter (6) zugeordnet ist, so dass das Distanzelement (7) aufgrund des ersten Vorsprungs (12) im Bereich des Aufnahmeraums (8) mit der Schraubenmutter (6) in Eingriff zur unverlierbaren Aufnahme gebracht wird, wobei das zweite Rohr (2) mittels der Schraube (5) in der Schraubenmutter (6) befestigt wird, so dass eine fluiddichte Bindung zwischen den beiden Rohren (1, 2) entsteht.

## Claims

1. A screw connection device for connecting two pipes (1, 2), consisting of two pipes (1, 2) with crimped pipe ends (3, 4), a screw (5), a nut (6) and a spacer element (7), wherein the nut (6) has a receiving space (8), wherein the spacer element (7) is captively accommodated in the receiving space (8), wherein the spacer element (7) captively holds the first pipe (1) in the nut (6), wherein the second pipe (2) can be fastened in the nut (6) by means of the screw (5), wherein an outer surface (9) of the spacer element (7) is cylindrically shaped over at least one section, wherein the spacer element (7) has a first (10) and a second (11) end face, wherein the spacer element (7) is provided with a first projection (12), which is engaged with the nut (6) in the area of the receiving space (8) for captive accommodation, **characterized in that** the nut (6) has an inwardly protruding nose (17) in the area of the receiving space (8), and that the nose (17) has allocated to it an indentation (18) on the outside of the nut (6).

2. The screw connection device according to claim 1, wherein the first projection (12) at least partially runs around the spacer element (7).

3. The screw connection device according to claim 1 or 2, wherein the first projection (12) borders the cylindrically shaped outer surface (9) of the spacer element.

4. The screw connection device according to one of claims 1 to 3, wherein the first projection (12) borders the first end face (10).

5. The screw connection device according to one of claims 1 to 4, wherein the first projection (12) protrudes in the radial direction.

6. The screw connection device according to one of claims 1 to 5, wherein a first flank (13) of the first projection (12) aligns with the first end face (10) of the spacer element (7).

7. The screw connection device according to one of claims 1 to 6, wherein the first projection (12) has a height (h) corresponding to 1 to 20%, preferably 3 to 15%, and especially preferably 6 to 10% of the radius (R) of the spacer element (7) in the area of the first projection (12) .

8. The screw connection device according to one of claims 1 to 7, wherein the first projection (12) has a width (b) corresponding to 5 to 50%, preferably 10 to 40%, and especially preferably 15 to 30% of the overall width (B) of the spacer element (7).

9. The screw connection device according to one of claims 1 to 8, wherein the spacer element (7) has a second projection (14), which at least in sections forms a groove (15) with the first projection (12), and wherein the second projection preferably corresponds to the first projection according to at least one of claims 1 to 8.

10. The screw connection device according to claim 9, wherein the second projection (14) has a second flank (16) that aligns with the second end face (11).

11. The screw connection device according to one of claims 1 to 10, wherein the nut (6) has three inwardly protruding noses (17) in the area of the receiving space (8) .

12. The screw connection device according to claim 11, wherein the three noses (17) have allocated to them a respective indentation (18) on the outside of the nut (6) .

13. The screw connection device according to one of claims 1 to 12, wherein the nut (6) at least in sections has an at least square exterior side with at least four flat partial surfaces (19) in the area of the receiving space (8).

14. The screw connection device according to claim 13, wherein the at least one and preferably the three indentations (18) are allocated to one or three of the flat partial surfaces (19), and wherein every second of the partial surfaces (19) especially preferably alternatingly has an indentation (18).

15. A method for connecting two pipes (1, 2), with a screw connection device according to claim 1, wherein the screw connection device consists of two pipes (1, 2) with crimped pipe ends (3, 4), a screw (5), a nut (6) and a spacer element (7), wherein the nut (6) has a receiving space (8), wherein an outer surface (9) of the spacer element (7) is cylindrically shaped over at least one section, wherein the spacer element (7) has a first end face (10) and a second end face (11), wherein the spacer element (7) is provided with a first projection (12), wherein a first pipe (1) with the crimped pipe end (3) is introduced into the nut (6), wherein the spacer element (7) is then introduced into the nut (6), wherein the nut (6) is thereafter caulked in the area of the receiving space (8) while exposed to a radially inward force, so that the nut (6) has at least one inwardly protruding nose (17) in the area of the receiving space (8), and the nose (17) has allocated to it an indentation (18) on the outside of the nut (6), so that the spacer element (7) is made to engage with the nut (6) for captive accommodation due to the first projection (12) in the area of the receiving space (8), wherein the second pipe (2) is fastened in the nut (6) by means of the screw (5), so that a fluid-tight bond arises between the two pipes (1, 2).

## Revendications

1. Dispositif de raccordement vissé, destiné à assembler deux tubes (1, 2), comprenant deux tubes (1, 2) avec des extrémités de tube (3, 4) serties, une vis (5), un écrou (6) et un élément espaceur (7), l'écrou (6) comprenant un espace de logement (8), l'élément espaceur (7) étant logé de manière imperdable dans l'espace de logement (8), l'élément espaceur (7) maintenant le premier tube (1) de manière imperdable dans l'écrou (6), le deuxième tube (2) pouvant être fixé au moyen de la vis (5) dans l'écrou (6), une surface extérieure (9) de l'élément espaceur (7) étant de conformation cylindrique au-delà d'au moins un segment, l'élément espaceur (7) comportant une première (10) et une deuxième faces frontales (11), sur l'élément espaceur (7) étant prévue une première saillie (12) laquelle dans la région de l'espace de logement (8) est en engagement avec l'écrou (6) pour sa réception imperdable, **caractérisé en ce que** dans la région de l'espace de logement (8), l'écrou (6) comporte au moins un ergot (17) saillant vers l'intérieur et à l'ergot (17) est associée une échancrure (18) sur la face extérieure de l'écrou (6).

2. Dispositif de raccordement vissé selon la revendication 1, la première saillie (12) entourant au moins partiellement l'élément espaceur (7).

3. Dispositif de raccordement vissé selon la revendication 1 ou 2, la première saillie (12) étant adjacente à la surface extérieure (9) de conformation cylindrique de l'élément espaceur.

4. Dispositif de raccordement vissé selon l'une quelconque des revendications 1 à 3, la première saillie (12) étant adjacente à la première face frontale (10).

5. Dispositif de raccordement vissé selon l'une quelconque des revendications 1 à 4, la première saillie (12) saillant dans la direction radiale.

6. Dispositif de raccordement vissé selon l'une quelconque des revendications 1 à 5, un premier flanc (13) de la première saillie (12) étant à fleur de la première face frontale (10) de l'élément espaceur (7).

7. Dispositif de raccordement vissé selon l'une quelconque des revendications 1 à 6, la première saillie (12) présentant une hauteur (h), laquelle correspond à de 1 à 20 %, de préférence à de 3 à 15 % et de manière particulièrement préférentielle de 6 à 10 % du rayon (R) de l'élément espaceur (7) dans la région de la première saillie (12).

8. Dispositif de raccordement vissé selon l'une quelconque des revendications 1 à 7, la première saillie (12) présentant une largeur (b), laquelle correspond à de 5 à 50 %, de préférence à de 10 à 40 % et de manière particulièrement préférentielle à de 15 à 30 % de la largeur totale (B) de l'élément espaceur (7) .

9. Dispositif de raccordement vissé selon l'une quelconque des revendications 1 à 8, l'élément espaceur (7) comportant une deuxième saillie (14), laquelle au moins par endroits forme avec la première saillie (12) une rainure (15) et de préférence la deuxième saillie correspondant à la première saillie selon au moins l'une quelconque des revendications 1 à 8.

10. Dispositif de raccordement vissé selon la revendication 9, la deuxième saillie (14) comportant un deuxième flanc (16), lequel est à fleur de la deuxième face frontale (11).

11. Dispositif de raccordement vissé selon l'une quelconque des revendications 1 à 10, dans la région de l'espace de logement (8), l'écrou (6) comportant trois ergots (17) saillant vers l'intérieur.

12. Dispositif de raccordement vissé selon la revendication 11, à chacun des trois ergots (17) étant respectivement associée une échancrure (18) sur la face extérieure de l'écrou (6).

13. Dispositif de raccordement vissé selon l'une quelconque des revendications 1 à 12, dans la région de l'espace de logement (8), l'écrou (6) comportant au moins par endroits une face extérieure carrée pourvue d'au moins quatre surfaces partielles (19) planes.

14. Dispositif de raccordement vissé selon la revendication 13, l'au moins une et de préférence les trois échancrures (18) étant associées à une ou à trois des surfaces partielles (19) planes et de manière particulièrement préférentielle, en alternance, une des surfaces partielles (19) sur deux présentant une échancrure (18).

15. Procédé, destiné à assembler deux tubes (1, 2), à l'aide d'un dispositif de raccordement vissé selon la revendication 1, le dispositif de raccordement vissé comprenant deux tubes (1, 2) avec des extrémités de tube (3, 4) serties, une vis (5), un écrou (6) et un élément espaceur (7), l'écrou (6) comportant un espace de logement (8), une surface extérieure (9) de l'élément espaceur (7) étant de conformation cylindrique au-delà d'au moins un segment, l'élément espaceur (7) comportant une première face frontale (10) et une deuxième face frontale (11), sur l'élément espaceur (7) étant placée une première saillie (12), lors duquel on introduit un premier tube (1) par l'extrémité de tube (3) sertie dans l'écrou (6), lors duquel on introduit ensuite l'élément espaceur (7) dans l'écrou (6), lors duquel on mate l'écrou (6) sous l'effet d'une force vers l'intérieur dans la région de l'espace de logement (8), de sorte que dans la région de l'espace de logement (8), l'écrou (6) comporte au moins un ergot (17) saillant vers l'intérieur et à l'ergot (17) étant associée une échancrure (18) sur la face extérieure de l'écrou (6), de sorte que dans la région de l'espace de logement (8) en raison de la première saillie (12), l'élément espaceur (7) entre en engagement avec l'écrou (6) pour sa réception imperdable, lors duquel on fixe le deuxième tube (2) au moyen de la vis (5) dans l'écrou (6), de sorte à donner naissance à une liaison étanche aux fluide entre les deux tubes (1, 2).
